(19) Europäisches Patentamt
European Patent Office
Office européen des brevets

(11) EP 4 446 378 A1

(12) **EUROPEAN PATENT APPLICATION**
published in accordance with Art. 153(4) EPC

(43) Date of publication:
**16.10.2024 Bulletin 2024/42**

(21) Application number: **22904012.6**

(22) Date of filing: **22.11.2022**

(51) International Patent Classification (IPC):
***C08L 9/06*** *(2006.01)* ***B60C 1/00*** *(2006.01)*
***C08K 3/04*** *(2006.01)* ***C08K 5/372*** *(2006.01)*
***C08L 91/00*** *(2006.01)* ***C08L 93/04*** *(2006.01)*

(52) Cooperative Patent Classification (CPC):
**B60C 1/00; C08K 3/04; C08K 5/372; C08L 9/06; C08L 91/00; C08L 93/04;** Y02T 10/86

(86) International application number:
**PCT/JP2022/043114**

(87) International publication number:
**WO 2023/106081 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2021 JP 2021198330**

(71) Applicant: **The Yokohama Rubber Co., Ltd.**
**Hiratsuka-shi, Kanagawa 254-8601 (JP)**

(72) Inventor: **NAKAGAWA Ryutaro**
**Hiratsuka-shi, Kanagawa 254-8601 (JP)**

(74) Representative: **Dilg, Haeusler, Schindelmann Patentanwaltsgesellschaft mbH**
**Leonrodstraße 58**
**80636 München (DE)**

# (54) RUBBER COMPOSITION FOR TIRE

(57) To provide a rubber composition for a tire providing dry grip performance over a wide temperature range, steering stability, and wear resistance in a good balance. A rubber composition for a tire, includes: 100 parts by mass of a diene rubber containing 30 mass% or more by mass of a styrene-butadiene rubber whose glass transition temperature is -40°C or higher; 100 parts by mass, in total, of a white filler and a carbon black; 0.3 to 10 parts by mass of a cyclic polysulfide; and 8 to 50 parts by mass of a thermoplastic resin. The rubber composition for a tire satisfies Tga - Tgm ≥ 10°C, where Tga is a theological glass transition temperature of a mixture in which the diene rubber and the thermoplastic resin are blended at a mass ratio of 1:1, the theological glass transition temperature Tga being calculated from glass transition temperatures of the diene rubber and the thermoplastic resin, and Tgm is a measured glass transition temperature of the mixture.

EP 4 446 378 A1

## Description

### Technical Field

The present invention relates to a rubber composition for a tire providing dry grip performance over a wide temperature range, steering stability, and wear resistance together in a good balance.

### Background Art

Examples of important performances required for high-performance tires include steering stability, dry grip performance, and wear resistance. In particular, an excellent dry grip performance is required over a wide temperature range, ranging from a normal temperature state to a high temperature state.

For example, Patent Document 1 discloses that a rubber composition for tire treads, in which a thermoplastic resin, a specific cyclic polysulfide, and carbon black are included at a specified ratio, improves dry grip performance and wear resistance. However, the demands for performances from consumers for high-performance type tires have been further increased, and further improvement is demanded also for the rubber composition for tire treads described in Patent Document 1. In particular, it is demanded that steering stability, dry grip performance over a wide temperature range, and wear resistance are attained together in a more improved balance.

### Citation List

### Patent Literature

Patent Document 1: JP 2010-235663 A

### Summary of Invention

### Technical Problem

An object of the present invention is to provide a rubber composition for a tire providing dry grip performance over a wide temperature range, steering stability, and wear resistance together in a more improved balance than levels in the related art.

### Solution to Problem

To achieve the object, a rubber composition for a tire according to the present invention includes: 100 parts by mass of a diene rubber containing 30 mass% or more of a styrene-butadiene rubber whose glass transition temperature is -40°C or higher; 100 parts by mass or more, in total, of a white filler and a carbon black; 0.3 to 10 parts by mass of a cyclic polysulfide; and 8 to 50 parts by mass of a thermoplastic resin. The rubber composition for a tire satisfies Tga - Tgm ≥ 10°C, where Tga is a theological glass transition temperature of a mixture in which the diene rubber and the thermoplastic resin are blended at a mass ratio of 1:1, the theological glass transition temperature Tga being calculated from glass transition temperatures of the diene rubber and the thermoplastic resin, and Tgm is a measured glass transition temperature of the mixture.

### Advantageous Effects of Invention

According to the rubber composition for a tire of the present invention, the diene rubber and the thermoplastic resin are selected to satisfy Tga - Tgm ≥ 10°C, where Tga is a theological glass transition temperature of a mixture in which the diene rubber and the thermoplastic resin are blended at a mass ratio of 1:1, the theological glass transition temperature Tga being calculated from glass transition temperatures of the diene rubber and the thermoplastic resin, and Tgm is a measured glass transition temperature of the mixture, and the diene rubber containing 30 mass% or more of styrene-butadiene rubber, the white filler, the carbon black, the cyclic polysulfide, and the thermoplastic resin are blended in predetermined amounts, thereby making it possible to attain the dry grip performance over a wide temperature range, steering stability, and wear resistance together in a more improved balance than levels in the related art.

The styrene-butadiene rubber has a styrene content of 30 to 40 mass% and has a terminal modifying group. In addition, the thermoplastic resin may be a resin including at least one selected from the group consisting of terpenes, terpene phenols, rosins, rosin esters, C5 components, and C9 components, and may have a softening point in a range of 100 to 180°C.

Further, the rubber composition for a tire further may include another thermoplastic resin different from the thermoplastic resin, wherein a value of a softening point of the another thermoplastic resin is less than 0.9 times or more than 1.1 times a value of a softening point of the thermoplastic resin, and the another thermoplastic resin is 10 mass% or more with respect to the thermoplastic resin.

The rubber composition for a tire described above can suitably constitute a tread portion of a tire. A tire having a tread portion made of the rubber composition for a tire according to the present invention can provide dry grip performance, steering stability over a wide temperature range, and wear resistance in a more improved balance than levels in the related art.

Description of Embodiments

The rubber composition for a tire contains a diene rubber as a rubber component, and the diene rubber contains a styrene-butadiene rubber having a glass transition temperature (hereinafter may be referred to as "Tg") of -40°C or higher. By including the styrene-butadiene rubber with Tg of -40°C or higher therein, the rubber composition can provide excellent wear resistance and dry grip performance. The Tg of the styrene-butadiene rubber is preferably in a range from -40°C to -10°C, and more preferably in a range from -30°C to -10°C. With the Tg of the styrene-butadiene rubber in this range, the dry grip performance can be ensured even when the temperature of the tire has become high. In this Description, Tg of the diene rubber can be a temperature at the midpoint of a transition region observed in a thermogram obtained by differential scanning calorimetry (DSC) performed at a temperature increase rate of 20°C/minute. When the diene rubber is an oil extended product, the Tg is the Tg of the diene rubber containing no oil-extending component (oil).

The content of the styrene-butadiene rubber with Tg of -40°C or higher is 30 mass% or more, preferably 40 mass% or more, and more preferably 50 mass% or more per 100 mass% of the diene rubber. The content of the styrene-butadiene rubber with Tg of -40°C or higher is 100 mass% or less, preferably 85 mass% or less, and more preferably 70 mass% or less, per 100 mass% of the diene rubber.

The styrene-butadiene rubber with Tg of -40°C or higher has a styrene content of 30 to 40 mass% and preferably has a terminal modifying group. The styrene content in the styrene-butadiene rubber with Tg of -40°C or higher is in a range from 30 to 40 mass%, or preferably in a range of from 31 to 39 mass%. When the styrene content is within such a range, the tensile strength at break of the rubber composition, particularly the tensile strength at break in a high temperature state of the rubber composition, can be increased, and the wear resistance can be excellent. In this Description, the styrene content of the styrene-butadiene rubber can be measured by $^1$H-NMR.

The styrene-butadiene rubber with Tg of -40°C or higher preferably has a terminal modifying group. By having a modifying group at the terminal, the styrene-butadiene rubber can have better silica dispersion therein, which is preferable. The type of the modifying group is not particularly limited, and examples thereof include epoxy group, carboxy group, amino group, hydroxy group, alkoxy group, silyl group, alkoxysilyl group, amide group, oxysilyl group, silanol group, isocyanate group, isothiocyanate group, carbonyl group, and aldehyde group.

Rubber components constituting the rubber composition for a tire may include another diene rubber besides the styrene-butadiene rubber with Tg of - 40°C or higher. Examples of the another diene rubber include natural rubber, isoprene rubber, butadiene rubber, styrene-butadiene rubber with Tg of lower than -40°C, styrene isoprene rubber, isoprene butadiene rubber, ethylenepropylene-diene copolymer rubber, chloroprene rubber, and acrylonitrile butadiene rubber. Among these, natural rubber, butadiene rubber, styrene-butadiene rubber with Tg of lower than -40°C, and the like are preferable. With the another diene rubber in the rubber composition, the wear resistance can be improved. The another diene rubber may have a modifying group, and the type of the modifying group applicable may be exemplified by those described above, and may be the same as or different from the terminal modifying group of the styrene-butadiene rubber with Tg of -40°C or higher. The another diene rubber may include one or more diene rubbers, and the total content thereof is the remaining amount obtained by subtracting the content of the styrene-butadiene rubber with Tg of -40°C or higher from 100 mass% of the diene rubber.

The natural rubber, butadiene rubber, and styrene-butadiene rubber with Tg of lower than -40°C are not particularly limited as long as the natural rubber, butadiene rubber, and styrene-butadiene rubber with Tg of lower than - 40°C are those typically used for rubber compositions for a tire. With the natural rubber in the rubber composition, the wear resistance of the tire can be ensured. Furthermore, with the butadiene rubber in the rubber composition, the wear resistance of the tire can be ensured. Furthermore, with the styrene-butadiene rubber with Tg of lower than -40°C in the rubber composition, the wet grip performance of the tire can be ensured.

The rubber composition for a tire includes a white filler and carbon black. The sum of the blended amounts of the white filler and the carbon black is 100 parts by mass or more, preferably in a range of 100 to 300 parts by mass, or more preferably in a range of 110 to 150 parts by mass per 100 parts by mass of the diene-type rubber. With the white filler and carbon black in the rubber composition, the tire durability such as the wear resistance, and the steering stability can be ensured. Examples of the white filler include silica, calcium carbonate, magnesium carbonate, talc, clay, alumina, aluminum hydroxide, titanium oxide, and calcium sulfate. Among them, silica is preferable. These white fillers

can be used solely, or two or more thereof can be used in combination.

The carbon black is not particularly limited as long as the carbon black is that typically used for a rubber composition for a tire. The nitrogen adsorption specific surface area of the carbon black is preferably from 80 to 250 $m^2/g$, more preferably from 90 to 230 $m^2/g$, or even more preferably from 95 to 220 $m^2/g$. When the carbon black has a nitrogen adsorption specific surface area of 80 $m^2/g$ or more, the dry grip performance and tire durability can be ensured. Furthermore, when the carbon black has the nitrogen adsorption specific surface area of 250 $m^2/g$ or less, heat build-up can be prevented from being excessively high. A combination of two or more types of the carbon blacks may be used. The nitrogen adsorption specific surface area of the carbon black can be determined in accordance with JIS K 6217-2.

In 100 parts by mass of the diene rubber, the carbon black may be blended in an amount of preferably from 5 to 100 parts by mass, or more preferably from 7 to 80 parts by mass. Blending 5 parts by mass or more of the carbon black can ensure tire durability. Additionally, rigidity can be ensured, and the steering stability can be ensured. When the carbon black is 100 parts by mass or less, the heat build-up can be prevented from being excessively high.

With the silica in the rubber composition, the wet grip properties can be improved. Examples of the silica include wet silica (hydrous silicic acid), dry silica (silicic anhydride), calcium silicate, and aluminum silicate. One type of these can be used alone, or a combination of two or more types of these can be used. Furthermore, surface-treated silica, in which the surface of silica is surface-treated by a silane coupling agent, may be also used.

In the rubber composition for a tire, a silane coupling agent is preferably blended together with the silica, and good dispersibility of the silica can be achieved. As the silane coupling agent, a type of silane coupling agent that is typically blended together with silica can be used. The silane coupling agent is blended in an amount of preferably from 5 to 15 mass%, and more preferably from 8 to 12 mass%, of the silica amount.

The rubber composition for a tire contains from 0.3 to 10 parts by mass of cyclic polysulfide in 100 parts by mass of the diene rubber. With the cyclic polysulfide in the rubber composition, the rubber composition can have a high tensile strength at break, particularly, a high tensile strength at break in a high temperature state, thereby ensuring an excellent wear resistance. That is, even when the rubber composition for a tire contains a relatively large amount of the thermoplastic resin described below, the tensile strength at break in a high temperature state can be increased, thereby ensuring the wear resistance.

Examples of the cyclic polysulfide include compounds represented by the following Formula (I). With such a cyclic polysulfide in the rubber composition, an excellent dry grip performance can be maintained for a long time. In addition, the cyclic polysulfide increases the rubber strength in a high temperature state. Blending of a thermoplastic resin into the rubber composition causes decrease of wear resistance of the rubber composition. The cyclic polysulfide can reduce such decrease.

[Chemical Formula 1]

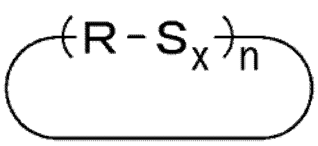

(I)

(where R is a substituted or unsubstituted alkylene group having from 2 to 20 carbons, a substituted or unsubstituted oxyalkylene group having from 2 to 20 carbons, or an alkylene group having an aromatic ring; x is a number averaging from 2 to 6; and n is an integer from 1 to 20).

In the cyclic polysulfide of Formula (I) above, when R is such an alkylene group or such an oxyalkylene group, the carbon number thereof is preferably from 2 to 18, and is more preferably from 4 to 8. Examples of substituents on the alkylene group and oxyalkylene group include a phenyl group, benzyl group, methyl group, epoxy group, isocyanate group, vinyl group, and silyl group. x is a number preferably averaging from 3 to 5, and more preferably averaging from 3.5 to 4.5. Moreover, n is preferably an integer from 1 to 15, more preferably an integer from 1 to 10, or even more preferably an integer from 1 to 5. Such a cyclic polysulfide can be produced by ordinary methods such as the production method described in JP 2007-92086 A.

The amount of the cyclic polysulfide per 100 parts by mass of the diene rubber is from 0.3 to 10 parts by mass, or is preferably from 1.0 to 7.5 parts by mass. If the amount of the cyclic polysulfide is less than 0.3 parts by mass, the effect of maintaining the dry grip performance at a high level for a long time will not be provided. Additionally, the decrease in wear resistance of the rubber composition with the thermoplastic resin therein cannot be sufficiently suppressed. Furthermore, if the amount of cyclic polysulfide exceeds 10 parts by mass, the dry grip performance at the early stage of driving will be deteriorated.

The rubber composition for a tire contains from 8 to 50 parts by mass of the thermoplastic resin in 100 parts by mass of the diene rubber. With the specific thermoplastic resin in the rubber composition, the tire can exhibit an excellent steering stability and an excellent dry grip performance over a wide temperature range, ranging from a normal temperature state to a high temperature state. With the above-described cyclic polysulfide further included in the rubber composition, the wear resistance can also be improved.

In the rubber composition for a tire, the specific thermoplastic resin satisfies the following relationship with the diene rubber. That is, it satisfies that Tga - Tgm ≥ 10°C, where Tga is a theological glass transition temperature of a mixture in which the diene rubber and the thermoplastic resin are blended at a mass ratio of 1:1, the theological glass transition temperature Tga being calculated from glass transition temperatures of the diene rubber and the thermoplastic resin, and Tgm is a measured glass transition temperature of the mixture (hereinafter, the specific thermoplastic resin satisfying this relationship may be referred to as "thermoplastic resin A"). When the difference Tga - Tgm is 10°C or more, the dry grip performance over a wide temperature range, the steering stability, and the wear resistance can be attained together in a better balance than levels in the related art. The difference (Tga - Tgm) is preferably in a range from 10°C to 30°C, or more preferably in a range from 12°C to 25°C. When the difference Tga - Tgm is 10°C or more, it is considerable that the diene rubber and the thermoplastic resin are in an incompatible relationship with the rigidity of the thermoplastic resin remained, contributing to the improvement of the steering stability and the grip performance in a high temperature state. Furthermore, the theoretical value (Tga) of the glass transition temperature of the mixture can be calculated as a weighted average value based on the glass transition temperatures and the mass ratio of the diene rubber and the thermoplastic resin. The glass transition temperatures (Tg) of the diene rubber and the thermoplastic resin, and the glass transition temperature (Tgm) of the mixture are measured values obtained by performing differential scanning calorimetry (DSC) at a rate of temperature increase of 20°C/min to obtain a thermogram thereby to obtain the temperature at the midpoint of the transition region as the glass transition temperatures Tg or Tgm. When there is a plurality of transition regions in the thermogram, the midpoint in the largest transition region is taken as the glass transition temperature Tgm of the mixture.

The thermoplastic resin is a resin usually blended in a rubber composition for a tire, has a molecular weight of about several hundreds to several thousands, and has a function of imparting adhesiveness to the rubber composition for a tire. It is preferable that the thermoplastic resin be a resin comprising at least one selected from terpenes, terpene phenols, rosins, rosin esters, C5 components and C9 components. Examples thereof include natural resins such as terpene resins, and rosin resins; and synthetic resins such as petroleum resins, coal-based resins, phenol resins, and xylene resins.

Examples of the terpene resins include α-pinene resin, β-pinene resin, limonene resin, hydrogenated limonene resin, dipentene resin, terpene phenol resin, terpene styrene resin, aromatic modified terpene resin, and hydrogenated terpene resin. Examples of the rosin resin include modified rosins such as gum rosin, tall oil rosin, wood rosin, hydrogenated rosin, disproportionate rosin, polymerized rosin, maleated rosin, and fumarized rosin; ester derivatives of these rosins such as glycerine esters, pentaerythritol esters, methyl esters, and triethylene glycol esters; and rosin-modified phenol resin.

The thermoplastic resin A has a softening point preferably in a range of 100°C to 180°C, and more preferably in a range of 120°C to 165°C. If the softening point of the thermoplastic resin is less than 100°C, the dry grip performance cannot be provided. If the softening point of the thermoplastic resin was higher than 180°C, the steering performance of the tire would be affected. The softening point of the thermoplastic resin is a value measured in accordance with JIS K5902.

The rubber composition for a tire may contain another thermoplastic resin B different from the thermoplastic resin A described above. In the present specification, the another thermoplastic resin B refers to a thermoplastic resin in which the difference Tga - Tgm described above in relation to the diene rubber is less than 10°C and which has compatibility with the diene rubber. The type of the another thermoplastic resin B is not particularly limited, and one having a difference Tga - Tgm of less than 10°C in relation to the diene rubber can be selected as appropriate from the above-described thermoplastic resins.

The softening point of the another thermoplastic resin B is not particularly limited, but the value of the softening point of the another thermoplastic resin B is preferably less than 0.9 times or more than 1.1 times the value of the softening point of the thermoplastic resin A. That is, the softening point of the another thermoplastic resin B is preferably out of the range of the softening point of the thermoplastic resin A by ±10%. More preferably, the value of the softening point of the another thermoplastic resin B is less than 0.9 times the value of the softening point of the thermoplastic resin A. By setting the softening point of the thermoplastic resin B as such, a high grip performance can be exhibited over a wide temperature range, which is preferable.

In addition, when the another thermoplastic resin B is included in the rubber composition for a tire, the blending amount of the another thermoplastic resin B is preferably 10 mass% or more, more preferably in a range of 10 to 250 mass%, or even more preferably in a range of 25 to 100 mass% with respect to the blending amount of the thermoplastic resin A. With the another thermoplastic resin B in the rubber composition in such a range, the temperature dependency

of the dry grip performance becomes smaller, which is preferable.

The rubber composition for a tire may also contain various additives that are commonly used in a rubber composition for a tire within a range that does not impair the object of the present invention. Examples thereof include vulcanization or crosslinking agents, vulcanization accelerators, anti-aging agents, plasticizers, processing aids, liquid polymers, and thermosetting resins. These additives may be kneaded by any commonly known method to form a rubber composition for a tire, and can be used for vulcanization or crosslinking. Blended amounts of these additives may be any known amount, so long as the objects of the present invention are not hindered.

The rubber composition for a tire described above can suitably constitute a tread portion of a tire. The tire may be a pneumatic tire or a non-pneumatic tire. A tire having a tread portion made from the rubber composition for a tire as described above can provide the dry grip performance over a wide temperature range, the steering stability, and the wear resistance together in a more improved balance than levels in the related art.

Embodiments according to the present invention are further described below by Examples. However, the scope of the present invention is not limited to these Examples.

Example

Rubber compositions for a tire (Examples 1 to 7, and Comparative Examples 1 to 5) were prepared according to the formulations shown in Tables 1 and 2 with the ingredients shown in Table 3 used as common components. With the exception of the sulfur and the vulcanization accelerator, the components were mixed and kneaded in a 1.7 L sealed Banbury mixer for 5 minutes, then discharged from the mixer, and cooled at room temperature. This was placed in the 1.7 L sealed Banbury mixer described above, and the sulfur and the vulcanization accelerators were then added and mixed, and thus a rubber composition for a tire was prepared. The blended amounts of the ingredients shown in Table 3 are expressed as values in part by mass per 100 parts by mass of the diene rubbers shown in Tables 1 and 2. In each rubber composition for a tire, a weighted average value was calculated as a theoretical value Tga of the glass transition temperature of a mixture in which the diene rubber and the thermoplastic resin were blended at the mass ratio of 1:1, where the weighted average value was calculated from the glass transition temperatures of the diene rubber and the thermoplastic resin and the mass ratio of the diene rubber and the thermoplastic resin with respect to the mixture. The measured glass transition temperature (Tgm) was determined from a temperature at a midpoint of a transition region in a thermogram measured at a temperature elevation rate of 20°C/min by differential scanning calorimetry (DSC). When there was a plurality of transition regions in the thermogram, the midpoint in the largest transition region was taken as the glass transition temperature Tgm of the mixture. The difference Tga - Tgm between the theoretical value Tga and the measured value Tgm of the glass transition temperature of the resulting mixture was calculated and shown in Tables 1 and 2.

A vulcanized rubber sheet was produced by vulcanizing the resulting rubber composition for a tire at 160°C for 20 minutes in a mold with a size of 15 cm × 15 cm × 0.2 cm. Then, the dynamic viscoelasticity was measured by the following method and used as an index value for the temperature dependency of the steering stability and the dry grip performance. Furthermore, tensile test under high temperature was conducted to obtain an index value for the wear resistance.

Dynamic Viscoelasticity Evaluation

The dynamic viscoelasticity of the vulcanized rubber sheet produced above was measured according to JIS K6394, with a viscoelasticity spectrometer manufactured by Toyo Seiki Seisaku-sho, Ltd., under conditions of an initial strain of 10%, an amplitude of ±2% and a frequency of 20Hz. The storage elastic modulus E', the loss elastic modulus E", and the complex elastic modulus E* (unit of each module: [MPa]) were determined at 20°C, 60°C, and 100°C.

The storage elastic modulus E' at 20°C thus measured is shown in the rows of "steering stability" in Tables 1 and 2 as index values referring to the value thereof in Comparative Example 1 being defined as 100. As the index values are larger, the storage elastic modulus E' at 20°C is larger, and thus the steering stability is superior.

From the loss elastic modulus E" and the complex elastic modulus E* thus determined, the loss compliances LC at 60°C and 100°C were calculated by the following calculation formula.

$$LC = E''/(E^*)^2$$

where LC is loss compliance [$MPa^{-1}$], E"is loss elastic modulus [MPa], and E* is complex elastic modulus [MPa],

From the results, the ratio $LC_{60}/LC_{100}$ of the loss compliance $LC_{60}$ at 60°C to the loss compliance $LC_{100}$ at 100°C was calculated. The calculated loss compliance ratios $LC_{60}/LC_{100}$ are shown in the rows of "Temperature Dependency of Dry Grip Performance" in Tables 1 and 2 as index values referring to the value thereof in Comparative Example 1 being set to 100. As this index is smaller, the ratio $LC_{60}/LC_{100}$ of the loss compliance is smaller, which means that the temperature dependency of the dry grip performance is more suppressed, which is more preferable.

Here, the larger the value of the loss compliance LC is, the larger the energy loss is, which means that heat can be more easily generated, and the dry grip performance is more excellent. The ratio $LC_{60}/LC_{100} > 1$, where $LC_{60}$ is the loss compliance at a temperature of 60°C and $LC_{100}$ is the loss compliance at a temperature of 100°C, means that the dry grip performance is more excellent at a temperature of 60°C than at a temperature of 100°C, and an excellent dry grip performance can be exhibited in a normal temperature range. On the other hand, a rubber having a ratio $LC_{60}/LC_{100} < 1$ has a better dry grip performance at a temperature of 100°C than at a temperature of 60°C, and can exhibit an excellent dry grip performance at high temperatures. Therefore, when the ratios $LC_{60}/LC_{100}$ (for example, the index values determined above) are compared with each other, the dry grip performance at relatively low temperatures is excellent when the index of the ratio $LC_{60}/LC_{100}$ is larger, and the dry grip performance at high temperatures is more excellent when the index of the ratio $LC_{60}/LC_{100}$ is smaller.

Tensile Test

The vulcanized rubber sheet produced above was used to prepare a dumbbell JIS3 type test sample in accordance with JIS K6251, and a tensile test was conducted with test sample at 100°C at a tensile rate of 500 mm/min to measure the tensile strength at break. The results are shown in the "Wear Resistance" rows of Tables 1 and 2 as index values referring to the value thereof in Comparative Example 1 being set to 100. As this index value is larger, the tensile strength at break at 100°C is larger, and the wear resistance is superior.

[Table 1]

| | | Comparative Example 1 | Comparative Example 2 | Comparative Example 3 | Comparative Example 4 | Comparative Example 5 |
|---|---|---|---|---|---|---|
| NR | Parts by mass | 10 | 10 | 10 | 10 | 10 |
| SBR-1 | Parts by mass | 50 | 50 | 10 | 50 | 50 |
| SBR-2 | Parts by mass | 40 | 40 | 90 | 40 | 40 |
| Carbon black | Parts by mass | 10 | 10 | 10 | 10 | 10 |
| Silica | Parts by mass | 120 | 120 | 120 | 120 | 120 |
| Thermoplastic resin-1 | Parts by mass | | 25 | 25 | 5 | 70 |
| Thermoplastic resin-2 | Parts by mass | | | | | |
| Thermoplastic resin-3 | Parts by mass | 30 | | | | |
| Cyclic polysulfide | Parts by mass | 1.5 | | 1.5 | 1.5 | 1.5 |
| Tga - Tgm | °C | 3 | 13 | 15 | 13 | 13 |

(continued)

| | | Comparative Example 1 | Comparative Example 2 | Comparative Example 3 | Comparative Example 4 | Comparative Example 5 |
|---|---|---|---|---|---|---|
| Steering stability | Index value | 100 | 118 | 103 | 100 | 220 |
| Temperature dependency of dry grip performance | Index value | 100 | 83 | 70 | 100 | 34 |
| Wear resistance | Index value | 100 | 94 | 87 | 104 | 52 |

Table 2

| | | Example 1 | Example 2 | Example 4 | Example 5 | Example 6 | Example 7 |
|---|---|---|---|---|---|---|---|
| NR | Parts by mass | 10 | 10 | | 10 | 10 | 10 |
| SBR-1 | Parts by mass | 30 | 50 | 100 | 50 | 50 | 50 |
| SBR-2 | Parts by mass | 60 | 40 | | 40 | 40 | 40 |
| Carbon black | Parts by mass | 10 | 10 | 10 | 10 | 10 | 10 |
| Silica | Parts by mass | 120 | 120 | 120 | 120 | 120 | 120 |
| Thermoplastic resin-1 | Parts by mass | 25 | 25 | 25 | 10 | | 15 |
| Thermoplastic resin-2 | Parts by mass | | | | | 25 | |
| Thermoplastic resin-3 | Parts by mass | | | | | | 10 |
| Cyclic polysulfide | Parts by mass | 1.5 | 1.5 | 1.5 | 1.5 | 1.5 | 1.5 |
| Tga - Tgm | °C | 13 | 12 | 12 | 12 | 17 | 11 |
| Steering stability | Index value | 111 | 118 | 150 | 108 | 140 | 110 |
| Temperature dependency of dry grip performance | Index value | 70 | 83 | 96 | 92 | 87 | 80 |

(continued)

| | | Example 1 | Example 2 | Example 4 | Example 5 | Example 6 | Example 7 |
|---|---|---|---|---|---|---|---|
| Wear resistance | Index value | 100 | 102 | 115 | 105 | 104 | 104 |

In Tables 1 and 2, the types of raw materials used are as follows.

- NR: Natural rubber, TSR20, Tg of -65°C
- SBR-1: Styrene-butadiene rubber, HPR620, available from JSR Corporation, Tg of -34°C, styrene content of 39 mass%, terminal modifying group of imide residues.
- SBR-2: Styrene butadiene rubber, TUFDENE 1834, available from Asahi Kasei Corporation, Tg of -71°C, styrene content of 20 mass%.
- Carbon black of SEAST 7HM, available from Tokai Carbon Co., Ltd.
- Silica: ZEOSIL 1165MP, available from Solvay
- Thermoplastic resin-1: Phenolic resin, Neopolymer 170S, available from Mitsui Chemicals, Inc., softening point: 160°C.
- Thermoplastic resin-2: C5/C9 resins, Tamanol 803L, available from Arakawa Chemical Industries, Ltd., softening point of 150°C.
- Thermoplastic resin-3: Aromatic modified terpene resin: YS resin TO-125, available from Yasuhara Chemical Co., Ltd., softening point of 125°C.
- Cyclic polysulfide: THIOPLAST CPS 200, available from AKZO NOBEL FUNCTIONAL CHEMICALS, a compound represented by the above formula (I).

Table 3

| | | |
|---|---|---|
| Silane coupling agent | 9.6 | Parts by mass |
| Oil | 20 | Parts by mass |
| Anti-aging agent | 3 | Parts by mass |
| Wax | 1 | Parts by mass |
| Sulfur | 1.5 | Parts by mass |
| Vulcanization accelerator | 1.5 | Parts by mass |

For Table 3, the types of the used raw materials are as follows.

- Silane coupling agent: NXT SILANE, available from Moment
- Oil: Extract No. 4S (available from Showa Shell Sekiyu K.K.)
- Anti-aging agent: VULKANOX 4020, available from Lanxess AG
- Wax: OZOACE-0015A, available from Nippon Seiro Co., Ltd.
- Sulfur: SULFAX 5, available from Tsurumi Chemical Industry Co., Ltd.
- Vulcanization accelerator: NOCCELER TOT-N, available from Ouchi Shinko Chemical Industrial Co., Ltd.

As can be seen from Tables 1 and 2, it was confirmed that the rubber compositions for a tire of Examples 1 to 7 had the dry grip performance over a wide temperature range, the steering stability, and the wear resistance together in a good balance.

Since the rubber composition for a tire of Comparative Example 1 does not contain the thermoplastic resin A described in the present invention, the dry grip performance over a wide temperature range, the steering stability, and the wear resistance are inferior to those of the Examples containing the thermoplastic resin A.

Since the rubber composition for a tire of Comparative Example 2 does not contain the cyclic polysulfide, the tensile strength at break at 100°C is low and the wear resistance is poor.

Because the rubber composition for a tire of Comparative Example 3 contains less than 30 mass% of the

styrene-butadiene rubber (SBR-1) with Tg of -40°C or higher of, the rubber composition is low in tensile strength at break at 100°C and poor in wear resistance.

In the rubber composition for a tire of Comparative Example 4, since the thermoplastic resin A described in the present invention is less than 8 parts by mass, the dry grip performance over a wide temperature range and the steering stability cannot be improved.

Because the rubber composition for a tire of Comparative Example 5 contains more than 50 parts by mass of the thermoplastic resin A, the rubber composition is low in tensile strength at break at 100°C and poor in wear resistance.

## Claims

**1.** A rubber composition for a tire, comprising:

100 parts by mass of a diene rubber containing 30 mass% or more of a styrene-butadiene rubber whose glass transition temperature is -40°C or higher;
100 parts by mass or more, in total, of a white filler and a carbon black;
0.3 to 10 parts by mass of a cyclic polysulfide; and
8 to 50 parts by mass of a thermoplastic resin,
the rubber composition satisfying $Tga - Tgm \geq 10°C$,
where
Tga is a theological glass transition temperature of a mixture in which the diene rubber and the thermoplastic resin are blended at a mass ratio of 1:1, the theological glass transition temperature Tga being calculated from glass transition temperatures of the diene rubber and the thermoplastic resin, and
Tgm is a measured glass transition temperature of the mixture.

**2.** The rubber composition for a tire according to claim 1, wherein the styrene-butadiene rubber has a styrene content of 30 to 40 mass%, and has at least one terminal modifying group.

**3.** The rubber composition for a tire according to claim 1 or 2, wherein the softening point of the thermoplastic resin is in a range from 100 to 180°C.

**4.** The rubber composition for a tire according to any one of claims 1 to 3, wherein the thermoplastic resin is a resin including at least one selected from the group consisting of terpenes, terpene phenols, rosins, rosin esters, C5 components, and C9 components.

**5.** The rubber composition for a tire according to any one of claims 1 to 4, further comprising another thermoplastic resin different from the thermoplastic resin, wherein a value of a softening point of the another thermoplastic resin is less than 0.9 times or more than 1.1 times a value of a softening point of the thermoplastic resin, and the another thermoplastic resin is 10 mass% or more with respect to the thermoplastic resin.

**6.** A tire comprising the rubber composition for a tire according to any one of claims 1 to 5.

## INTERNATIONAL SEARCH REPORT

International application No. **PCT/JP2022/043114**

### A. CLASSIFICATION OF SUBJECT MATTER

***C08L 9/06***(2006.01)i; ***B60C 1/00***(2006.01)i; ***C08K 3/04***(2006.01)i; ***C08K 5/372***(2006.01)i; ***C08L 91/00***(2006.01)i; ***C08L 93/04***(2006.01)i

FI: C08L9/06; C08K3/04; C08K5/372; C08L93/04; C08L91/00; B60C1/00 Z

According to International Patent Classification (IPC) or to both national classification and IPC

### B. FIELDS SEARCHED

Minimum documentation searched (classification system followed by classification symbols)

C08L9/06; B60C1/00; C08K3/04; C08K5/372; C08L91/00; C08L93/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-235663 A (YOKOHAMA RUBBER CO LTD) 21 October 2010 (2010-10-21) claims, examples | 1, 3-4, 6 |
| Y | | 5-6 |
| A | | 2 |
| Y | JP 2019-131742 A (YOKOHAMA RUBBER CO LTD) 08 August 2019 (2019-08-08) claims, examples | 5-6 |
| A | WO 2019/026477 A1 (YOKOHAMA RUBBER CO LTD) 07 February 2019 (2019-02-07) | 1-6 |
| A | WO 2020/075829 A1 (BRIDGESTONE CORPORATION) 16 April 2020 (2020-04-16) | 1-6 |
| A | JP 2019-19310 A (SUMITOMO RUBBER INDUSTRIES, LTD) 07 February 2019 (2019-02-07) | 1-6 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/043114**

| Patent document cited in search report | Publication date (day/month/year) | Patent family member(s) | Publication date (day/month/year) |
|---|---|---|---|
| JP 2010-235663 A | 21 October 2010 | (Family: none) | |
| JP 2019-131742 A | 08 August 2019 | (Family: none) | |
| WO 2019/026477 A1 | 07 February 2019 | US 2021/0139675 A1<br>CN 110944851 A | |
| WO 2020/075829 A1 | 16 April 2020 | (Family: none) | |
| JP 2019-19310 A | 07 February 2019 | US 2019/0023879 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010235663 A